# FASCICULE DE BREVET EUROPEEN

(11) **EP 3 889 007 B1**
(45) Date de publication et mention de la délivrance du brevet: **06.08.2025**
(21) Numéro de dépôt: 21162809.4
(22) Date de dépôt: 16.03.2021
(51) Int. Cl.: B62D 7/15, B62D 13/04, B66C 23/34

(54) **ENSEMBLE DE REMORQUE ET GRUE À MONTAGE AUTOMATISÉ ASSOCIÉE**
ANHÄNGEREINHEIT UND ENTSPRECHENDER KRAN MIT AUTOMATISIERTER MONTAGE
TRAILER ASSEMBLY AND ASSOCIATED CRANE WITH AUTOMATED INSTALLATION

(30) Priorité: 30.03.2020 FR 2003112
(43) Date de publication de la demande: 06.10.2021
(73) Titulaire: Manitowoc Crane Group France, 69570 Dardilly (FR)
(72) Inventeur: ALLOIN, Yves, 71800 ST GERMAIN EN BRIONNAIS (FR); GAY, Olivier, 71800 BAUDEMONT (FR); GRIMAUD, Simon, 69003 LYON (FR); VEILLEROT, Vincent, 69160 TASSIN LA DEMI LUNE (FR); MALY, Téva, 69007 LYON (FR)
(74) Mandataire: Germain Maureau

(56) Documents cités:
- EP-A1- 0 439 370
- EP-A1- 2 508 680
- EP-A1- 2 974 942
- DE-A1- 19 856 593
- DE-A1- 4 334 279
- US-A1- 2004 221 673
- US-A1- 2016 185 359
- US-A1- 2019 055 741

## Description

L'invention se rapporte à un ensemble de remorque.

L'invention trouve une application favorite, et non limitative, pour une grue à montage automatisé équipée d'un tel ensemble de remorque.

L'invention se rapporte plus particulièrement à un ensemble de remorque comprenant un châssis reposant, par l'intermédiaire d'un dispositif de suspension, sur un dispositif à double essieux comprenant un premier essieu supportant des premières roues et un deuxième essieu supportant des deuxièmes roues ; un tel ensemble de remorque pouvant s'appliquer à un remorquage sur timon, et également à un remorquage sur sellette aussi appelé semi-remorquage.

L'emploi d'un dispositif à double essieux est avantageux pour accepter une charge élevée sur le châssis, comme c'est le cas pour une grue à montage automatisé, en particulier pour augmenter la capacité de levage de la grue avec des lests portés par le châssis.

Cependant, le dispositif à double essieux présente une capacité de manœuvre réduite, comparativement à un dispositif à simple essieu, et favorise les phénomènes de ripage, ce qui peut endommager le dispositif à double essieux ou le terrain sur lequel manœuvre l'ensemble de remorque.

En effet, lors de manœuvres à basse vitesse (en-deçà d'un seuil bas de vitesse de l'ordre de 5 à 10 km/h), nécessaires pour positionner correctement l'ensemble de grue dans une position finale, il est pratique de pouvoir diriger les roues de l'ensemble de remorque, et pas uniquement les roues du camion tracteur qui tracte l'ensemble de remorque, que ce soit en remorquage sur timon ou en remorquage sur sellette.

Le document EP1225734 propose ainsi un ensemble de remorque qui utilise un premier système hydraulique de direction pour une direction synchronisée des premières roues et des deuxièmes roues lors de manœuvres à basse vitesse. Pour ce faire, ce premier système hydraulique de direction comprend un vérin hydraulique qui agit sur le premier essieu, et le deuxième essieu est mécaniquement couplé au premier essieu par une bielle longitudinale de renvoi, de sorte qu'avec un unique vérin hydraulique il est possible de faire pivoter les deux essieux en même temps, et donc de diriger les premières roues et les deuxièmes roues en synchronisation. Le document DE19856593A1, ou son équivalent EP1037848, décrit également ce type d'ensemble de remorque, pour une grue à montage automatisé, qui met en œuvre un unique vérin hydraulique associé à une bielle longitudinale de renvoi pour synchroniser les pivotements des deux essieux.

Cependant, ce premier système hydraulique de direction présente l'inconvénient d'être encombrant, du fait principalement de l'emploi d'une bielle longitudinale de renvoi qui doit être de grande dimension (car dans la longueur) pour transmettre un couple de direction entre les deux essieux. Par ailleurs, la direction synchronisée des deux essieux réduit la capacité de manœuvre dans un espace réduit.

Il est par ailleurs connu d'employer un second système hydraulique de direction pour une direction synchronisée des premières roues et des deuxièmes roues lors de manœuvres à basse vitesse. Pour ce faire, ce second système hydraulique de direction comprend un premier vérin hydraulique qui agit sur le premier essieu, et un second vérin hydraulique qui agit sur le deuxième essieu, où le premier vérin hydraulique et le second vérin hydraulique sont connectés à une même centrale hydraulique qui les alimentent de manière synchronisée, de sorte qu'il fait pivoter les deux essieux en même temps, et donc dirige les premières roues et les deuxièmes roues en synchronisation.

Cependant, ce second système hydraulique de direction présente des limites, en particulier en cas de ripage (différence d'adhérence entre certaines roues) ou en cas d'efforts extérieurs appliqués de manière asymétrique sur les roues (par exemple les premières roues de gauche sont en butée sur un obstacle comme un trottoir) qui provoquent une désynchronisation des directions des roues avec des conséquences néfastes pour le second système hydraulique de direction, et une perte de contrôle dans la manœuvre.

L'état de la technique peut également être illustré par les enseignements du document US2004/0221673, qui propose un ensemble de remorque selon le préambule de la revendication 1 comprenant un premier essieu et un second essieu qui peuvent être dirigés de manière synchrone ou de manière indépendante, et un dispositif de commande pour contrôler les directions du premier essieu et du second essieu. Bien qu'avantageux pour les manœuvres à basse vitesse en permettant de diriger de manière indépendante les essieux, cet ensemble de remorque présente l'inconvénient de faire appel à un système de direction, par exemple hydrauliques, nécessairement complexe car permettant de diriger en même temps et indépendamment le premier essieu et le second essieu. Ce pilotage de la direction des deux essieux, en même temps et de manière indépendante ou individualisé, complexifie donc également le dispositif de commande qui doit faire appel à un premier organe de direction pour diriger le premier essieu, et à un second organe de direction pour diriger le second essieu, et également à un organe de sélection pour sélectionner une direction synchronisée ou indépendante.

L'invention se propose de résoudre en tout ou partie ces problèmes, en proposant un ensemble de remorque pourvu d'un système de direction adapté pour corriger de manière dynamique des défauts d'orientation des roues qui seraient dus à des phénomènes de ripage ou à des efforts extérieurs appliqués de manière asymétrique sur les roues, tout en offrant un encombrement réduit.

Un autre but de l'invention est de proposer un système de direction associé à un dispositif de commande qui soient simples en termes de conception et d'utilisation, tout en permettant de répondre au problème identifié ci-dessus des phénomènes de ripage et d'efforts extérieurs appliqués de manière asymétrique sur les roues.

A cette fin, l'invention propose un ensemble de remorque, selon la revendication 1, comprenant un châssis, un dispositif de suspension, un dispositif à double essieux, des premières roues et des deuxièmes roues, où ledit châssis repose, par l'intermédiaire dudit dispositif de suspension, sur le dispositif à double essieux, dans lequel le dispositif à double essieux comprend un premier essieu supportant les premières roues et un deuxième essieu supportant les deuxièmes roues, et dans lequel l'ensemble de remorque comprend un système de direction pour diriger les premières roues et les deuxièmes roues lors de manœuvres en-deçà d'un seuil bas de vitesse, ledit système de direction comprend un premier actionneur accouplé aux premières roues, un deuxième actionneur accouplé aux deuxièmes roues, et un circuit de commande relié au premier actionneur et au deuxième actionneur,
dans lequel ledit circuit de commande comprend un dispositif de pilotage configurable dans un mode de manœuvre basse vitesse dans lequel l'un au moins du premier actionneur et du deuxième actionneur est actionnable pour diriger l'une au moins des premières roues et des deuxièmes roues, et dans lequel, en mode de manœuvre basse vitesse,
ledit ensemble de remorque étant remarquable en ce que le dispositif de pilotage est sous-configurable entre :
   - un sous-mode synchronisé dans lequel le premier actionneur et le deuxième actionneur sont actionnables de manière synchronisée pour diriger les premières roues et les deuxièmes roues de manière synchronisée ; et
   - un sous-mode désynchronisé dans lequel le premier actionneur et le deuxième actionneur sont actionnables de manière individuelle et indépendante pour diriger soit uniquement les premières roues soit uniquement les deuxièmes roues ;
ledit ensemble de remorque comprenant en outre un dispositif de commande relié au dispositif de pilotage pour :
   - sélectionner soit le sous-mode synchronisé soit le sous-mode désynchronisé lorsque le dispositif de pilotage est en mode de manœuvre basse vitesse ; et
   - sélectionner un actionnement soit du premier actionneur soit du deuxième actionneur dans le sous-mode désynchronisé ;
et en ce que ce le dispositif de commande comporte :
   - un organe de sélection pour sélectionner parmi les trois sous-modes comprenant le sous-mode synchronisé, le sous-mode désynchronisé avec actionnement du seul premier actionneur, et le sous-mode désynchronisé avec actionnement du seul deuxième actionneur ; et
   - un organe de direction pour diriger les premières roues et les deuxièmes roues.

Ainsi, l'invention propose un dispositif de pilotage qui permet :
- avec une sélection sur l'organe de sélection du dispositif de commande, de fonctionner soit dans le sous-mode synchronisé, soit dans le sous-mode désynchronisé avec actionnement du seul premier actionneur, soit dans le sous-mode désynchronisé avec actionnement du seul deuxième actionneur et, par ailleurs,
- en agissant sur l'organe de direction du dispositif de commande, soit de diriger de manière synchronisée les premières roues et les deuxièmes roues si c'est le sous-mode synchronisé qui est sélectionné, soit de diriger les seules première roues si c'est le sous-mode désynchronisé avec actionnement du seul premier actionneur qui est sélectionné (les secondes roues restant alors fixes), soit de diriger les seules secondes roues si c'est le sous-mode désynchronisé avec actionnement du seul second actionneur qui est sélectionné (les premières roues restant alors fixes).

Aussi, une fois en sous-mode désynchronisé, l'organe de direction permet de diriger soit les premières roues soit les deuxièmes roues. De cette manière, un opérateur peut choisir soit de diriger les premières roues et les deuxièmes roues de manière synchronisée, soit de diriger uniquement les premières roues, soit de diriger uniquement les deuxièmes roues. Autrement dit, le dispositif de commande permet à la fois de choisir le mode ou sous-mode adapté à la situation, et également de diriger les roues (soit de manière synchronisée dans le sous-mode synchronisé, soit de manière individuelle et indépendante dans le sous-mode désynchronisé).

Grâce à l'invention, il est donc possible d'adapter de façon dynamique la direction des premières roues et des deuxièmes roues, en fonction de la trajectoire recherchée dans une manœuvre basse vitesse, et en fonction d'un éventuel cas de ripage ou d'efforts extérieurs appliqués de manière asymétrique sur les roues, et ce au moyen d'un dispositif de pilotage et d'un dispositif de commande simple d'utilisation.

Dans une réalisation particulière, le dispositif de pilotage est configurable entre :
- un mode de transport dans lequel le premier actionneur et le deuxième actionneur sont non actionnables pour verrouiller les premières roues et les deuxièmes roues dans une position droite associée à un déplacement en ligne droite ; et
- le mode de manœuvre basse vitesse ;
et le dispositif de commande est relié au dispositif de pilotage pour sélectionner soit le mode de transport, soit le mode de manœuvre basse vitesse.

De cette manière, lors d'un transport sur route, donc à haute vitesse, le mode de transport est sélectionné et les roues restent droites. Par contre, lors de manœuvres à basse vitesse, et si nécessaire, le mode de manœuvre basse vitesse peut être sélectionné, avec le choix entre le sous-mode désynchronisé et le sous-mode désynchronisé.

Selon une possibilité, l'organe de sélection comprend un moyen de rappel qui sollicite un retour de l'organe de sélection dans la position neutre associée au sous-mode synchronisé.

Ce moyen de rappel sur l'organe de sélection est particulièrement avantageux car il permet que le sous-mode synchronisé soit le sous-mode par défaut, sans intervention de l'opérateur sur l'organe de sélection ou en cas de relâchement de l'organe de sélection par l'opérateur, ce sous-mode synchronisé étant le sous-mode qui sera le plus utilisé lors de manœuvres basse vitesse, les deux sous-modes désynchronisés étant des sous-modes exceptionnels exploités en particulier en cas de phénomène de ripage ou d'un effort extérieur appliqué de manière asymétrique sur les roues.

Selon une autre possibilité, l'organe de direction comprend un moyen de rappel qui sollicite un retour de l'organe de direction dans une position neutre associée à un alignement des premières roues et des deuxièmes roues dans une position droite associée à un déplacement en ligne droite.

Ce moyen de rappel sur l'organe de direction est particulièrement avantageux car il permet que le déplacement en ligne droite soit le déplacement par défaut, sans intervention de l'opérateur sur l'organe de direction ou en cas de relâchement de l'organe de direction par l'opérateur.

Selon une caractéristique, le premier actionneur est un premier vérin et le deuxième actionneur est un deuxième vérin.

Dans une première réalisation, le premier vérin est un premier vérin électrique, le deuxième vérin est un deuxième vérin électrique, et le circuit de commande est un circuit électrique.

Dans une seconde réalisation, le premier vérin est un premier vérin hydraulique, le deuxième vérin est un deuxième vérin hydraulique, et le circuit de commande est un circuit de commande hydraulique alimenté hydrauliquement par au moins une centrale hydraulique, et ce circuit de commande hydraulique comprend un premier sous-circuit hydraulique relié au premier vérin hydraulique et un deuxième sous-circuit hydraulique relié au deuxième vérin hydraulique, le premier sous-circuit hydraulique et le deuxième sous-circuit hydraulique étant en parallèle.

Cette conformation en parallèle du premier sous-circuit hydraulique et du deuxième sous-circuit hydraulique est avantageuse, car elle permet de fiabiliser le sous-mode désynchronisé avec actionnement du seul premier actionneur (qui s'opère au travers du premier sous-circuit hydraulique) et le sous-mode désynchronisé avec actionnement du seul deuxième actionneur (qui s'opère au travers du deuxième sous-circuit hydraulique), tout en permettant un fonctionnement dans le sous-mode synchronisé (qui s'opère au travers d'un fonctionnement parallèle du premier sous-circuit hydraulique et du deuxième sous-circuit hydraulique).

Selon une possibilité, le premier sous-circuit hydraulique et le deuxième sous-circuit hydraulique sont alimentés hydrauliquement :
- soit par une centrale hydraulique commune, et un diviseur de débit est disposé entre la centrale hydraulique commune et le premier sous-circuit hydraulique et le deuxième sous-circuit hydraulique (pour répartir équitablement la pression hydraulique dans les deux sous-circuits) ;
- soit par deux centrales hydrauliques respectives fonctionnant en parallèle.

Selon une autre possibilité, le dispositif de pilotage comprend :
- un premier distributeur hydraulique placé sur le premier sous-circuit hydraulique et équipé d'au moins une première électrovanne pour actionner le premier vérin hydraulique, ladite au moins une première électrovanne étant en liaison avec le dispositif de commande ; et
- un deuxième distributeur hydraulique placé sur deuxième sous-circuit hydraulique et équipé d'au moins une deuxième électrovanne pour actionner le deuxième vérin hydraulique, ladite au moins une deuxième électrovanne étant en liaison avec le dispositif de commande.

Ainsi, la sélection avec le dispositif de commande se fait en agissant sur la ou les premières électrovannes et sur la ou les deuxièmes électrovannes.

Dans un mode de réalisation particulier, le premier vérin hydraulique est un premier vérin hydraulique double effet raccordé à deux premières voies du premier sous-circuit hydraulique, et le deuxième vérin hydraulique est un deuxième vérin hydraulique double effet raccordé à deux deuxièmes voies du deuxième sous-circuit hydraulique.

Selon une caractéristique, le premier distributeur hydraulique est un premier distributeur hydraulique à tiroirs qui comprend au moins un premier tiroir ouvert associé à un actionnement du premier vérin hydraulique double effet selon un premier sens, et un deuxième tiroir ouvert associé à un actionnement du premier vérin hydraulique double effet selon un deuxième sens opposé au premier sens, et dans lequel l'au moins une première électrovanne commande la sélection entre le premier tiroir ouvert et le deuxième tiroir ouvert.

De même, le deuxième distributeur hydraulique est un deuxième distributeur hydraulique à tiroirs qui comprend au moins un premier tiroir ouvert associé à un actionnement du deuxième vérin hydraulique double effet selon un premier sens, et un deuxième tiroir ouvert associé à un actionnement du deuxième vérin hydraulique double effet selon un deuxième sens opposé au premier sens, et dans lequel l'au moins une deuxième électrovanne commande la sélection entre le premier tiroir ouvert et le deuxième tiroir ouvert.

Ainsi, lorsque le sous-mode synchronisé est sélectionné, le premier distributeur hydraulique à tiroirs et le deuxième distributeur hydraulique à tiroirs sont tous les deux dans la même configuration :
- soit avec chacun le premier tiroir ouvert actif pour déplacer de manière synchronisée les deux vérins hydrauliques double effet dans le premier sens ;
- soit avec chacun le deuxième tiroir ouvert actif pour déplacer de manière synchronisée les deux vérins hydrauliques double effet dans le deuxième sens.

Lorsque le sous-mode désynchronisé est sélectionné et que c'est le premier vérin hydraulique double effet qui est actionné, alors :
- le premier distributeur hydraulique à tiroirs a soit son premier tiroir ouvert actif, soit son deuxième tiroir ouvert actif ; et
- le deuxième distributeur hydraulique à tiroirs est par exemple plus alimenté ou alors il est fermé.

De même, lorsque le sous-mode désynchronisé est sélectionné et que c'est le deuxième vérin hydraulique double effet qui est actionné, alors :
- le deuxième distributeur hydraulique à tiroirs a soit son premier tiroir ouvert actif, soit son deuxième tiroir ouvert actif ; et
- le premier distributeur hydraulique à tiroirs est par exemple plus alimenté ou alors il est fermé.

Avantageusement, le premier distributeur hydraulique à tiroirs comprend un troisième tiroir fermé associé à un non actionnement du premier vérin hydraulique double effet, et l'au moins une première électrovanne comprend au moins deux premières électrovannes qui commandent la sélection entre le premier tiroir ouvert, le deuxième tiroir ouvert et le troisième tiroir fermé.

De même, le deuxième distributeur hydraulique à tiroirs comprend un troisième tiroir fermé associé à un non actionnement du deuxième vérin hydraulique double effet, et l'au moins une deuxième électrovanne comprend au moins deux deuxièmes électrovannes qui commandent la sélection entre le premier tiroir ouvert, le deuxième tiroir ouvert et le troisième tiroir fermé.

Autrement dit, le troisième tiroir fermé correspond à une fermeture du distributeur hydraulique à tiroirs correspondant.

Ainsi, lorsque le sous-mode désynchronisé est sélectionné et que c'est le premier vérin hydraulique double effet qui est actionné, alors :
- le premier distributeur hydraulique à tiroirs a soit son premier tiroir actif, soit son deuxième tiroir actif ; et
- le deuxième distributeur hydraulique à tiroirs a quant à lui son troisième tiroir actif, et donc le deuxième distributeur hydraulique à tiroirs est fermé.

De même, lorsque le sous-mode désynchronisé est sélectionné et que c'est le deuxième vérin hydraulique double effet qui est actionné, alors :
- le deuxième distributeur hydraulique à tiroirs a soit son premier tiroir ouvert actif, soit son deuxième tiroir ouvert actif ; et
- le premier distributeur hydraulique à tiroirs a quant à lui son troisième tiroir actif, et donc le premier distributeur hydraulique à tiroirs est fermé.

Par ailleurs, lorsque le mode de transport est sélectionné, chacun des distributeurs hydrauliques à tiroirs a son troisième tiroir actif, de sorte qu'ils sont tous les deux fermés.

Dans une réalisation avantageuse, les deux premières électrovannes sont chacune équipées d'un système de rappel sollicitant vers une sélection du troisième tiroir fermé du premier distributeur hydraulique à tiroirs, et les deux deuxièmes électrovannes sont chacune équipées d'un système de rappel sollicitant vers une sélection du troisième tiroir fermé du deuxième distributeur hydraulique à tiroirs.

Ainsi, en l'absence d'une commande des deux premières électrovannes, le premier distributeur hydraulique à tiroirs sera naturellement avec son troisième tiroir actif, et le premier distributeur hydraulique à tiroirs sera alors fermé. De même, en l'absence d'une commande des deux deuxièmes électrovannes, le deuxième distributeur hydraulique à tiroirs sera naturellement avec son troisième tiroir actif, et le deuxième distributeur hydraulique à tiroirs sera alors fermé.

Selon une possibilité, une première valve d'équilibrage double effet est disposée entre les deux premières voies du premier sous-circuit hydraulique, en aval du premier distributeur hydraulique, et une deuxième valve d'équilibrage double effet est disposée entre les deux deuxièmes voies du deuxième sous-circuit hydraulique, en aval du deuxième distributeur hydraulique.

Entre les distributeurs hydrauliques et les vérins hydrauliques double effet, sont positionnées ces valves double effet qui permettent d'augmenter la robustesse du circuit de commande hydraulique face à des efforts latéraux extérieurs pouvant provoquer une désynchronisation des essieux.

Dans un premier mode de réalisation, les premières roues sont montées pivotantes sur le premier essieu via des premiers pivots droite et gauche, et un premier mécanisme de direction relie mécaniquement les premiers pivots droite et gauche pour une orientation commune des premières roues, et le premier actionneur est couplé à l'un des premiers pivots droite et gauche,
et les deuxièmes roues sont montées pivotantes sur le deuxième essieu via des deuxièmes pivots droite et gauche, et un deuxième mécanisme de direction relie mécaniquement les deuxièmes pivots droite et gauche pour une orientation commune des deuxièmes roues, et le deuxième actionneur est couplé à l'un des deuxièmes pivots droite et gauche.

Ainsi, la direction des roues s'opère par pivotement des roues sur les essieux qui eux ne tournent pas, selon un montage dit d'essieu à pivot.

Dans un second mode de réalisation, le premier essieu est monté pivotant sur le châssis au moyen d'une première couronne de direction pour une orientation commune des premières roues, et le premier actionneur est couplé à ladite première couronne de direction,
et le deuxième essieu est monté pivotant sur le châssis au moyen d'une deuxième couronne de direction pour une orientation commune des deuxièmes roues, et le deuxième actionneur est couplé à ladite deuxième couronne de direction

Ainsi, la direction des roues s'opère par pivotement des essieux, selon un montage dit d'essieu tournant.

Selon une possibilité, le dispositif de commande est une télécommande sans fil.

Selon une variante, le dispositif de commande est une commande filaire.

Selon une autre possibilité, un système de calage est prévu sur le châssis pour prendre appui sur un sol et décoller les premières roues et les deuxièmes roues du sol.

Avantageusement, le système de calage est un système de calage hydraulique qui est relié à la centrale hydraulique alimentant le circuit de commande hydraulique.

De cette manière, le circuit de commande hydraulique profite d'une centrale hydraulique présente pour alimenter le système de calage hydraulique, ce qui est le cas classiquement dans une grue à montage automatisé. Ainsi, l'ajout de la fonction offerte par le système de direction fait appel à un nombre réduit d'éléments, car la centrale hydraulique est déjà présente.

L'invention se rapporte également à une grue à montage automatisé comprenant un mât monté sur une plateforme tournante et supportant une flèche, ladite grue à montage automatisé comprenant en outre un ensemble de remorque selon l'invention, ladite plateforme tournante étant montée sur le châssis dudit ensemble de remorque, une telle grue à montage automatisé étant configurable entre une configuration de transport dans laquelle le mât et la flèche sont repliés sur eux-mêmes, et une configuration de travail dans laquelle le mât et la flèche sont dépliés.

D'autres caractéristiques et avantages de la présente invention apparaîtront à la lecture de la description détaillée ci-après, d'un exemple de mise en œuvre non limitatif, faite en référence aux figures annexées dans lesquelles :
[Fig 1] est une vue schématique de côté d'une grue à montage automatisé équipé d'un ensemble de remorque selon l'invention, où la grue à montage automatisé est en configuration de transport ;
[Fig 2] est une vue schématique de côté de l'ensemble de remorque de la grue de la Figure 1 ;
[Fig 3] est une vue schématique de dessous de l'ensemble de remorque de la Figure 2 ;
[Fig 4] est une vue schématique de dessous de l'un des essieux de l'ensemble de remorque de la Figure 3 ;
[Fig 5] est une vue schématique d'un circuit de commande hydraulique d'un système de direction adapté pour l'ensemble de remorque de la Figure 2 ;
[Fig 6] est une vue schématique d'un dispositif de commande lors d'un pilotage dans un sous-mode synchronisé, avec à côté l'ensemble de remorque vue de dessus ;
[Fig 7] est une vue schématique du dispositif de commande de la Figure 6, lors d'un pilotage dans un sous-mode désynchronisé avec un actionnement du seul premier actionneur pour diriger uniquement les premières roues, avec à côté l'ensemble de remorque vue de dessus ;
[Fig 8] est une vue schématique du dispositif de commande de la Figure 6, lors d'un pilotage dans un sous-mode désynchronisé avec un actionnement du seul deuxième actionneur pour diriger uniquement les deuxièmes roues, avec à côté l'ensemble de remorque vue de dessus ; et
[Fig 9] est une vue schématique d'un circuit d'alimentation électrique adapté à l'invention mise en œuvre dans une grue à montage automatisé.

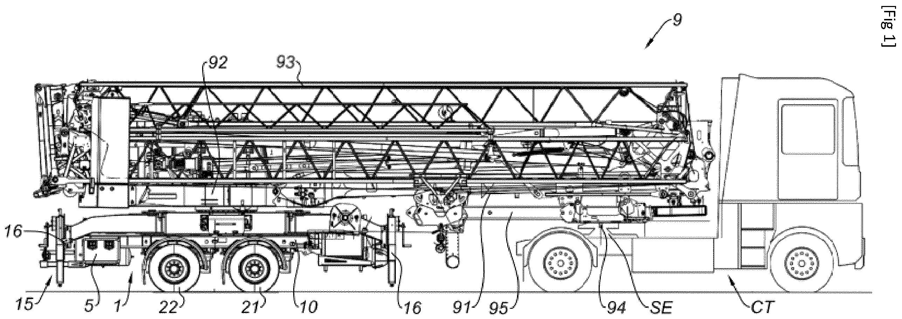

La suite de la description porte sur un ensemble de remorque 1 selon un exemple de réalisation de l'invention, prévu par exemple pour équiper une grue à montage automatisé 9 visible en Figure 1, étant rappelé qu'un tel ensemble de remorque 1 pourrait être adapté au convoyage d'autres types de charges.

La grue à montage automatisé 9 comprend un mât 91 monté sur une plateforme tournante 92 et supportant une flèche 93, où la grue à montage automatisé 9 est configurable entre :
- une configuration de transport, illustrée sur la Figure 1, dans laquelle le mât 91 et la flèche 93 sont repliés sur eux-mêmes ; et
- une configuration de travail (non illustrée) dans laquelle le mât 91 et la flèche 93 sont dépliés.

La grue à montage automatisé 9 comprend ainsi un mécanisme de pliage/dépliage qui agit sur le mât 91 pour plier et déplier la grue et ainsi la faire passer de la configuration de travail vers la configuration de transport, et inversement.

Pour pouvoir transporter la grue à montage automatisé 9, en configuration de transport, le mât 91 supporte un élément d'attelage muni d'un axe d'attelage 94 propre à s'accoupler sur une sellette SE prévue sur une plateforme arrière d'un camion tracteur CT, ainsi que représenté sur la Figure 1. De cette manière, la grue à montage automatisé 9 peut faire l'objet d'un transport sur sellette.

Il est par ailleurs envisageable que la grue à montage automatisé 9 puisse, en variante ou en option, comprendre un timon de remorquage 95 qui est monté sur le mât 91 ; un tel timon de remorquage 95 présentant une tête d'attelage propre à être accouplée à un élément de remorquage d'un camion remorqueur (de type remorque). Dans la version illustrée en Figure 1, le timon de remorquage 95 est escamotable et peut donc être dans une position rétractée qui est utilisée lors d'un transport sur sellette ou en configuration de travail, et dans une position déployée qui est utilisée uniquement lors d'un transport sur timon.

La plateforme tournante 92 est montée pivotante selon un axe vertical sur l'ensemble de remorque 1 qui comprend un châssis 10 reposant, par l'intermédiaire d'un dispositif de suspension, sur un dispositif à double essieux comprenant un premier essieu 11 supportant des premières roues 21 et un deuxième essieu 12 supportant des deuxièmes roues 22.

Le dispositif de suspension comprend par exemple une première suspension par ressorts à lames 110 supportant le premier essieu 11, et une deuxième suspension par ressorts à lames 120 supportant le deuxième essieu 12.

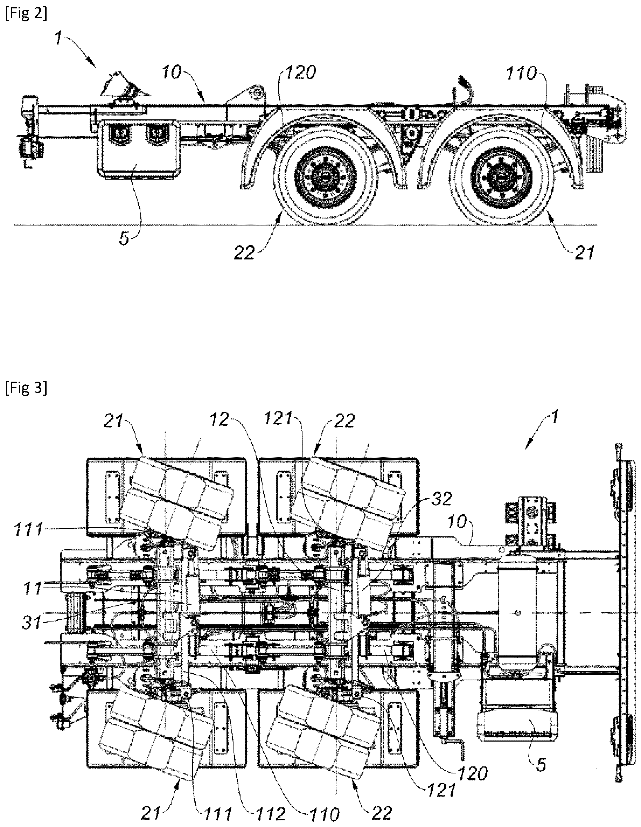

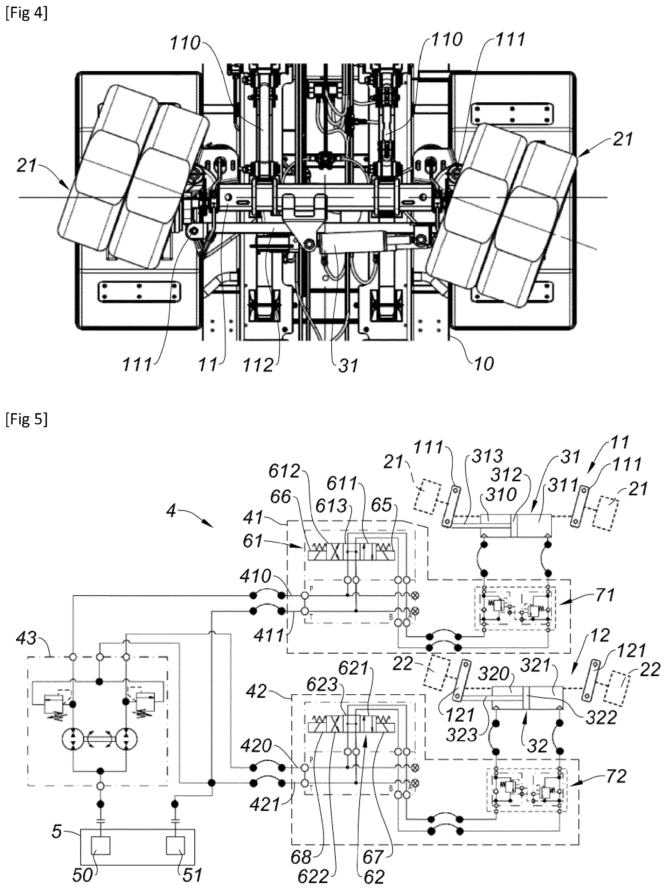

Dans le mode de réalisation illustré sur les Figures 3 et 4, les premières roues 21 sont montées pivotantes sur le premier essieu 11 via des premiers pivots droite et gauche 111, et un premier mécanisme de direction 112 (formé par exemple d'une bielle) relie mécaniquement les premiers pivots droite et gauche 111 pour une orientation commune des premières roues 21.

De même, les deuxièmes roues 22 sont montées pivotantes sur le deuxième essieu 12 via des deuxièmes pivots droite et gauche 121, et un deuxième mécanisme de direction (formé par exemple d'une bielle) relie mécaniquement les deuxièmes pivots droite et gauche 121 pour une orientation commune des deuxièmes roues 22.

Cet ensemble de remorque 1 comprend un système de direction pour diriger les premières roues 21 et les deuxièmes roues 22 lors de manœuvres en-deçà d'un seuil bas de vitesse, par exemple de 5 à 10 km/h, aussi appelées manœuvres basse vitesse employées pour diriger l'ensemble de remorque 1, et donc la grue à montage automatisé 9.

Ce système de direction est un système de direction hydraulique qui comprend :
- un premier actionneur qui se présente sous la forme d'un premier vérin hydraulique à double effet 31 (appelé par la suite premier vérin 31) accouplé aux premières roues 21, et plus spécifiquement couplé à l'un des premiers pivots droite et gauche 111,
- un deuxième actionneur qui se présente sous la forme d'un deuxième vérin hydraulique à double effet 32 (appelé par la suite deuxième vérin 32) accouplé aux deuxièmes roues 22, et plus spécifiquement couplé à l'un des deuxièmes pivots droite et gauche 121.

Ainsi, le premier vérin 31 permet de diriger (ou tourner) les premières roues 21, tandis que le deuxième vérin 32 permet de diriger (ou tourner) les deuxièmes roues 22. Les premières roues 21 et les deuxièmes roues 22 ne sont pas mécaniquement couplées ou liées en rotation, de sorte que le premier vérin 31 fait tourner uniquement les premières roues 21, et pas les deuxièmes roues 22, et le deuxième vérin 32 fait tourner uniquement les deuxièmes roues 22, et pas les premières roues 21.

En référence à la Figure 5, le système de direction hydraulique comprend en outre un circuit de commande hydraulique 4 relié au premier vérin 31 et au deuxième vérin 32, et alimenté par une centrale hydraulique 5. Ce circuit de commande hydraulique 4 comprend :
- un premier sous-circuit hydraulique 41 reliant le premier vérin 31 à la centrale hydraulique 5 ; et
- un deuxième sous-circuit hydraulique 42 reliant le deuxième vérin 32 à la centrale hydraulique 5.

Le premier sous-circuit hydraulique 41 et le deuxième sous-circuit hydraulique 42 sont ainsi en parallèle et sont tous deux alimentés par la centrale hydraulique 5. Un diviseur de débit 43 est disposé entre la centrale hydraulique 5 et le premier sous-circuit hydraulique 41 et le deuxième sous-circuit hydraulique 42, pour répartir la pression hydraulique de manière équitable entre le premier sous-circuit hydraulique 41 et le deuxième sous-circuit hydraulique 42.

Cette centrale hydraulique 5 peut être portée par le châssis 10, comme visible sur les Figures 1 et 2. Il est par ailleurs avantageux que cette centrale hydraulique 5 soit partagée avec un autre système hydraulique employé dans l'ensemble de remorque 1, et par exemple dans la grue à montage automatisé 9. Par exemple, un tel ensemble de remorque 1 peut comprendre un système de calage hydraulique 15 est prévu sur le châssis 10 pour prendre appui sur un sol et décoller les roues dans la configuration de travail. Un tel système de calage hydraulique 15 comprend plusieurs vérins hydrauliques 16 reliés à la centrale hydraulique 5.

Dans une variante non illustrée, le premier sous-circuit hydraulique 41 et le deuxième sous-circuit hydraulique 42 sont alimentés par deux centrales hydrauliques respectives fonctionnant en parallèle, avec des pressions hydrauliques équivalentes entre le premier sous-circuit hydraulique 41 et le deuxième sous-circuit hydraulique 42.

Le premier sous-circuit hydraulique 41 et le deuxième sous-circuit hydraulique 42 sont identiques, et le premier vérin 31 et le deuxième vérin 32 sont aussi identiques, de sorte que leurs descriptions seront faites en commun dans la suite.

Le premier sous-circuit hydraulique 41 (respectivement le deuxième sous-circuit hydraulique 42) comprend deux premières voies 410, 411 (respectivement 420, 421), à savoir :
- une première voie d'alimentation 410 (respectivement 420) qui fournit la pression d'alimentation et qui est reliée à une pompe hydraulique 50 de la centrale hydraulique 5 ; et
- une première voie de retour 411 (respectivement 421) qui permet l'échappement et qui est reliée à un réservoir 51 de la centrale hydraulique 5.

Le premier vérin 31 (respectivement le deuxième vérin 32) comprend un cylindre dans lequel coulisse un piston 312 (respectivement 322) solidaire d'une tige 313 (respectivement 323) articulée sur l'un des premiers pivots droite et gauche 111 (respectivement l'un des deuxièmes pivots droite et gauche 121). Ce cylindre présente une chambre de compression 310 (respectivement 320) et une chambre de détente 311 (respectivement 321) disposées de part et d'autre du piston 312 (respectivement 322).

Deux actionnement du premier vérin 31 (respectivement deuxième vérin 32) sont donc possibles :
- un actionnement en compression, dans lequel la chambre de compression 310 (respectivement 320) est en liaison fluidique avec la première voie d'alimentation 410 (respectivement 420) et la chambre de détente 311 (respectivement 321) est en liaison fluidique avec la première voie de retour 411 (respectivement 421), procurant ainsi une compression de la tige 313 (respectivement 323) qui se rétracte, ce qui correspond à un actionnement du premier vérin 31 (respectivement deuxième vérin 32) selon un premier sens, pour diriger les premières roues 21 (respectivement deuxièmes roues 22) selon une première direction ;
- un actionnement en détente, dans lequel la chambre de détente 311 (respectivement 321) est en liaison fluidique avec la première voie d'alimentation 410 (respectivement 420) et la chambre de compression 310 (respectivement 320) est en liaison fluidique avec la première voie de retour 411 (respectivement 421), procurant ainsi une détente de la tige 313 (respectivement 323) qui se déploie, ce qui correspond à un actionnement du premier vérin 31 (respectivement deuxième vérin 32) selon un deuxième sens opposé au premier sens, pour diriger les premières roues 21 (respectivement deuxièmes roues 22) selon une deuxième direction, opposée à la première direction.

Le diviseur de débit 43 est positionné entre la première voie d'alimentation 410 et la deuxième voie d'alimentation 420 pour répartir la pression hydraulique issue de la pompe hydraulique 50.

Le circuit de commande hydraulique 4 comprend un dispositif de pilotage qui intègre :
- un premier distributeur hydraulique à tiroirs 61 (appelé par la suite premier distributeur 61) placé sur le premier sous-circuit hydraulique 41, en amont du premier vérin 31, et plus spécifiquement ; et
- un deuxième distributeur hydraulique à tiroirs 62 (appelé par la suite deuxième distributeur 62) placé sur deuxième sous-circuit hydraulique 42, en amont du deuxième vérin 32.

Le premier distributeur 61 et le deuxième distributeur 62 sont identiques, de sorte que leurs descriptions seront faites en commun dans la suite.

Le premier distributeur 61 (respectivement le deuxième distributeur 62) est un distributeur du type 4/3, c'est-à-dire à quatre voies et trois tiroirs (ou trois positions), et en particulier un distributeur à centre fermé. Ce premier distributeur 61 (respectivement 62) comprend :
- un premier tiroir ouvert 611 (respectivement 621) qui met en liaison fluidique la première voie d'alimentation 410 (respectivement deuxième voie d'alimentation 420) et la chambre de compression 310 (respectivement 320) du premier vérin 31 (respectivement deuxième vérin 32) et qui met en liaison fluidique la première voie de retour 411 (respectivement deuxième voie de retour 421) et la chambre de détente 311 (respectivement 321) du premier vérin 31 (respectivement deuxième vérin 32), de sorte que ce premier tiroir ouvert 611 (respectivement 621) est associé à un actionnement du premier vérin 31 (respectivement deuxième vérin 32) selon le premier sens (actionnement en compression) ;
- un deuxième tiroir ouvert 612 (respectivement 622) qui met en liaison fluidique la première voie d'alimentation 410 (respectivement deuxième voie d'alimentation 420) et la chambre de détente 311 (respectivement 321) du premier vérin 31 (respectivement deuxième vérin 32) et qui met en liaison fluidique la première voie de retour 411 (respectivement deuxième voie de retour 421) et la chambre de compression 310 (respectivement 320) du premier vérin 31 (respectivement deuxième vérin 32), de sorte que ce deuxième tiroir ouvert 612 (respectivement 622) est associé à un actionnement du premier vérin 31 (respectivement deuxième vérin 32) selon le deuxième sens (actionnement en détente) ;
- un troisième tiroir fermé 613 (respectivement 623), formant un tiroir central intercalé entre le premier tiroir ouvert 611 (respectivement 621) et le deuxième tiroir ouvert 612 (respectivement 622), et qui ferme les liaisons fluidiques entre le premier vérin 31 (respectivement deuxième vérin 32) et les deux voies 410, 411 (respectivement 420, 421), de sorte que ce troisième tiroir fermé 613 (respectivement 623) est associé à un non actionnement du premier vérin 31 (respectivement deuxième vérin 32).

Le premier distributeur 61 (respectivement le deuxième distributeur 62) est équipé de deux premières électrovannes 65, 66 (respectivement deux deuxièmes électrovannes 67, 68) qui commandent la sélection entre le premier tiroir ouvert 611 (respectivement 621), le deuxième tiroir ouvert 612 (respectivement 622) et le troisième tiroir fermé 613 (respectivement 623).

Ces deux premières électrovannes 65, 66 (respectivement deux deuxièmes électrovannes 67, 68) sont toutes deux équipées d'un système de rappel sollicitant vers une sélection du troisième tiroir fermé 613 (respectivement 623). Autrement dit, les systèmes de rappel (comme par exemple des ressorts) de chaque côté du premier distributeur 61 (respectivement deuxième distributeur 62) ramènent le premier distributeur 61 (respectivement deuxième distributeur 62) en position centrale (neutre) quand les premières électrovannes 65, 66 (respectivement deux deuxièmes électrovannes 67, 68) ne sont pas activées (ou sous tension).

De manière plus précise, les premières électrovannes 65, 66 (respectivement deuxièmes électrovannes 67, 68) comprennent une première électrovanne droite 65 (respectivement une deuxième électrovanne droite 67) et une première électrovanne gauche 66 (respectivement une deuxième électrovanne gauche 68), et :
- une activation de la première électrovanne droite 65 (respectivement deuxième électrovanne droite 67) positionne une sélection du premier tiroir ouvert 611 (respectivement 621), et pilote donc un actionnement du premier vérin 31 (respectivement deuxième vérin 32) selon le premier sens (actionnement en compression) ;
- une activation de la première électrovanne gauche 66 (respectivement deuxième électrovanne gauche 68) positionne une sélection du deuxième tiroir ouvert 612 (respectivement 622), et pilote donc un actionnement du premier vérin 31 (respectivement deuxième vérin 32) selon le deuxième sens (actionnement en détente) ; et
- une non activation des deux premières électrovannes 65, 66 (respectivement deuxièmes électrovannes 67, 68) positionne une sélection du troisième tiroir fermé 613 (respectivement 623), et donc un non actionnement du premier vérin 31 (respectivement deuxième vérin 32).

Par ailleurs, une première valve d'équilibrage double effet 71 est disposée entre les deux premières voies 410, 411 du premier sous-circuit hydraulique 41, en aval du premier distributeur 61, et une deuxième valve d'équilibrage double effet 72 est disposée entre les deux deuxièmes voies 420, 421 du deuxième sous-circuit hydraulique 42, en aval du deuxième distributeur 62.

Ainsi, le dispositif de pilotage est configurable dans un mode de manœuvre basse vitesse dans lequel l'un au moins du premier vérin 31 et du deuxième vérin 32 est actionnable pour diriger l'une au moins des premières roues 21 et des deuxièmes roues 22.

De manière plus précise, dans ce mode de manœuvre basse vitesse, le dispositif de pilotage est sous-configurable entre :
- un sous-mode synchronisé « SMS » dans lequel le premier vérin 31 et le deuxième vérin 32 sont actionnables de manière synchronisée pour diriger les premières roues 21 et les deuxièmes roues 22 de manière synchronisée ; et
- un sous-mode désynchronisé « SMD » dans lequel le premier vérin 31 et le deuxième vérin 32 sont actionnables de manière individuelle et indépendante pour diriger soit uniquement les premières roues 21 soit uniquement les deuxièmes roues 22.

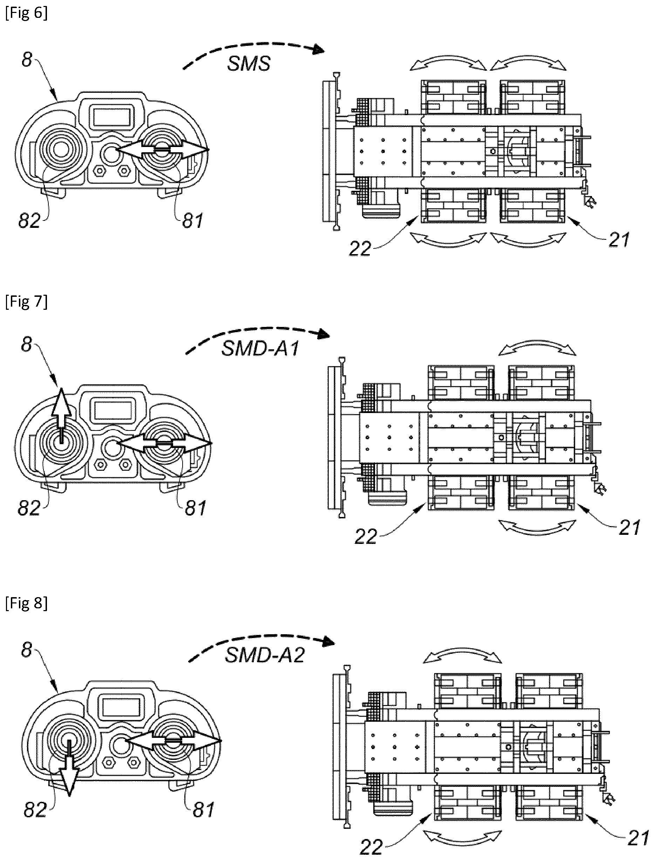

L'ensemble de remorque 1 comprenant en outre un dispositif de commande 8, visible sur les Figures 6 à 8, relié au dispositif de pilotage, et plus précisément relié aux quatre électrovannes 65, 66, 67, 68 pour :
- sélectionner soit le sous-mode synchronisé « SMS » soit le sous-mode désynchronisé « SMD » lorsque le dispositif de pilotage est en mode de manœuvre basse vitesse ; et
- sélectionner un actionnement soit du premier vérin 31 soit du deuxième vérin 32 lorsque le sous-mode désynchronisé « SMD » est sélectionné.

Ce dispositif de commande 8 est par exemple une télécommande, pour une commande sans fil et à distance. Ce dispositif de commande 8 comprend par exemple deux manettes, une manette de direction 81 et une manette de sélection 82.

La manette de sélection 82 sert à la sélection du sous-mode synchronisé « SMS », du sous-mode désynchronisé « SMD » et à la sélection de l'actionnement soit du premier vérin 31 soit du deuxième vérin 32 dans le sous-mode désynchronisé « SMD ».

La manette de sélection 82 propose ainsi trois positions :
- une position neutre associée au sous-mode synchronisé « SMS », qui sur la Figure 6 correspond à une position centrale ;
- une position associée au sous-mode désynchronisé « SMD » et à l'actionnement « A1 » du premier vérin 31 seul (ou sous-mode « SMD-A1 »), qui sur la Figure 7 correspond à une position haute ; et
- une position associée au sous-mode désynchronisé « SMD » et à l'actionnement « A2 » du deuxième vérin 32 seul (ou sous-mode « SMD-A2»), qui sur la Figure 8 correspond à une position basse.

Ce dispositif de commande 8 est pourvu d'un moyen de rappel qui sollicite un retour de la manette de sélection 82 dans la position neutre associée au sous-mode synchronisé « SMS ». Aussi, en l'absence d'une action sur la manette de sélection 82, c'est le sous-mode synchronisé « SMS » qui est par défaut sélectionné.

La manette de direction 81 sert quant à elle à diriger les roues 21, 22 selon la première direction (par exemple en la poussant à droite) ou selon la deuxième direction (par exemple en la poussant à gauche). Ce dispositif de commande 8 est pourvu d'un moyen de rappel qui sollicite un retour de la manette de direction 81 dans une position neutre associée à un alignement des roues 21, 22 dans une position droite associée à un déplacement en ligne droite.

En référence à la Figure 6, lorsque la manette de sélection 82 est dans la position associée au sous-mode synchronisé « SMS », le dispositif de commande 8 active de manière synchronisée :
- soit la première électrovanne droite 65 et la deuxième électrovanne droite 67 pour piloter un actionnement synchronisé du premier vérin 31 et du deuxième vérin 32 selon le premier sens, et donc diriger les premières roues 21 et les deuxièmes roues 22 de manière synchronisée selon la première direction (si on agit sur la manette de direction 81 pour une direction selon la première direction) ;
- soit la première électrovanne gauche 66 et la deuxième électrovanne gauche 68 pour piloter un actionnement synchronisé du premier vérin 31 et du deuxième vérin 32 selon le deuxième sens, et donc diriger les premières roues 21 et les deuxièmes roues 22 de manière synchronisée selon la deuxième direction (si on agit sur la manette de direction 81 pour une direction selon la deuxième direction).

En référence à la Figure 7, lorsque la manette de sélection 82 est dans la position associée au sous-mode désynchronisé « SMD » et à l'actionnement « A1 » du premier vérin 31 seul (ou sous-mode « SMD-A1 »), le dispositif de commande 8 active :
- soit uniquement la première électrovanne droite 65 pour piloter un actionnement du seul premier vérin 31 selon le premier sens, et donc diriger les seules premières roues 21 selon la première direction (si on agit sur la manette de direction 81 pour une direction selon la première direction), les deuxièmes roues 22 restant en position droite ;
- soit uniquement la première électrovanne gauche 66 pour piloter un actionnement du seul premier vérin 31 selon le deuxième sens, et donc diriger les seules premières roues 21 selon la deuxième direction (si on agit sur la manette de direction 81 pour une direction selon la deuxième direction), les deuxièmes roues 22 restant en position droite.

En référence à la Figure 8, lorsque la manette de sélection 82 est dans la position associée au sous-mode désynchronisé « SMD » et à l'actionnement « A2 » du deuxième vérin 32 seul (ou sous-mode « SMD-A2 »), le dispositif de commande 8 active :
- soit uniquement la deuxième électrovanne droite 67 pour piloter un actionnement du seul deuxième vérin 32 selon le premier sens, et donc diriger les seules deuxièmes roues 22 selon la première direction (si on agit sur la manette de direction 81 pour une direction selon la première direction), les premières roues 21 restant en position droite ;
- soit uniquement la deuxième électrovanne gauche 68 pour piloter un actionnement du seul deuxième vérin 32 selon le deuxième sens, et donc diriger les seules deuxièmes roues 22 selon la deuxième direction (si on agit sur la manette de direction 81 pour une direction selon la deuxième direction).

Le dispositif de pilotage est également configurable dans un mode de transport dans lequel le premier vérin 31 et le deuxième vérin 32 sont non actionnables pour verrouiller les roues 21, 22 dans la position droite associée à un déplacement en ligne droite.

Dans ce mode de transport, les quatre électrovannes 65, 66, 67, 68 ne sont pas activés, et ainsi les deux vérins 31, 32 ne sont pas actionnés.

Le dispositif de commande 8 est relié au dispositif de pilotage pour sélectionner soit le mode de transport, soit le mode de manœuvre basse vitesse.

Ce mode de transport correspond au mode neutre qui associe la position neutre de la manette de sélection 82 et la position neutre de la manette de direction 81. Ainsi, la position neutre de la manette de sélection 82 est associée à la fois au sous-mode synchronisé « SMS » et au mode de transport, ce n'est que si on agit ou non sur la manette de direction 81 que l'on passe de l'un à l'autre.

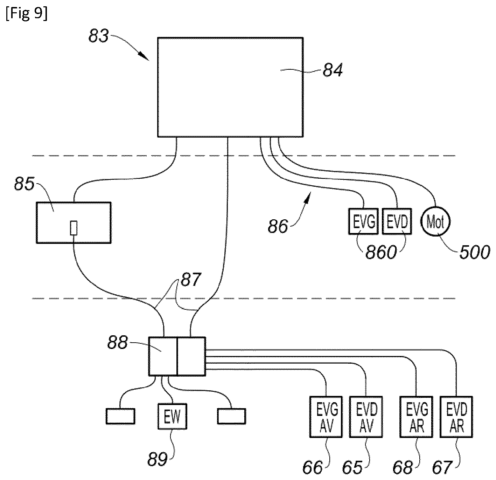

La Figure 9 illustre un circuit d'alimentation électrique 83 adapté pour une grue à montage automatisé. En effet, de manière classique, une grue à montage automatisé est équipée d'une armoire électrique 84 alimentée par une source électrique autonome 85, par exemple disposée sur le châssis 10, comprenant une ou plusieurs batteries électriques. Une câblerie standard 86 relie l'armoire électrique 84 à des électrovannes 17 pilotant les vérins hydrauliques 16 du système de calage hydraulique 15, et à un moteur électrique 500 de la pompe hydraulique 50 de la centrale hydraulique 5. Ces éléments 84, 85, 86, 860, 500 sont déjà présents sur la grue à montage automatisé.

Pour l'alimentation électrique du système de direction hydraulique décrit précédemment, une câblerie secondaire 87 est prévue pour relier l'armoire électrique 84 et la source électrique autonome 85 à une unité électrique secondaire 88, elle-même reliée aux quatre électrovannes 65, 66, 67, 68. Cette unité électrique secondaire 88 peut également être reliée à une électrovanne supplémentaire 89 qui sert à connecter la centrale hydraulique 5 soit au système de calage hydraulique 15 (une fois la grue à l'arrêt), soit au système de direction hydraulique et à son circuit de commande hydraulique 4 (pendant les manœuvres basse vitesse).

Ainsi l'alimentation électrique du système de direction hydraulique est intégré à la grue, et est donc économique car elle ne fait pas appel à une centrale dédiée ou à une source dédiée. De même, le dispositif de commande 8 est de préférence celui déjà utilisé pour commander la grue dans ses diverses fonctions (pliage/dépliage, levage et distribution, calage, ...).

## Revendications

1. Ensemble de remorque (1), comprenant un châssis (10) , un dispositif de suspension (110, 120), un dispositif à double essieux (110, 120), des premières roues (21) et des deuxièmes roues (22), où ledit châssis (10) repose, par l'intermédiaire dudit dispositif de suspension (110, 120), sur ledit dispositif à double essieux, dans lequel le dispositif à double essieux comprend un premier essieu (11) supportant lesdites premières roues (21) et un deuxième essieu (12) supportant lesdites deuxièmes roues (22), et dans lequel l'ensemble de remorque (1) comprend un système de direction pour diriger les premières roues (21) et les deuxièmes roues (22) lors de manœuvres en-deçà d'un seuil bas de vitesse, ledit système de direction comprend un premier actionneur (31) accouplé aux premières roues (21), un deuxième actionneur (32) accouplé aux deuxièmes roues (22), et un circuit de commande (4) relié au premier actionneur (31) et au deuxième actionneur (32),
dans lequel ledit circuit de commande (4) comprend un dispositif de pilotage (61, 62) configurable dans un mode de manœuvre basse vitesse dans lequel l'un au moins du premier actionneur (31) et du deuxième actionneur (32) est actionnable pour diriger l'une au moins des premières roues (21) et des deuxièmes roues (22),
ledit ensemble de remorque (1) étant **caractérisé en ce que**, en mode de manœuvre basse vitesse, le dispositif de pilotage (61, 62) est sous-configurable entre :
- un sous-mode synchronisé dans lequel le premier actionneur (31) et le deuxième actionneur (32) sont actionnables de manière synchronisée pour diriger les premières roues (21) et les deuxièmes roues (22) de manière synchronisée ; et
- un sous-mode désynchronisé dans lequel le premier actionneur (31) et le deuxième actionneur (32) sont actionnables de manière individuelle et indépendante pour diriger soit uniquement les premières roues (21) avec les deuxièmes roues (22) fixes dans un sous-mode désynchronisé avec actionnement du seul premier actionneur (31), soit uniquement les deuxièmes roues (22) avec les premières roues (21) fixes dans un sous-mode désynchronisé avec actionnement du seul deuxième actionneur (32) ;
ledit ensemble de remorque (1) comprenant en outre un dispositif de commande (8) relié au dispositif de pilotage (61, 62), ledit dispositif de commande (8) étant une télécommande sans fil ou une commande filaire configurée pour :
- sélectionner soit le sous-mode synchronisé soit le sous-mode désynchronisé lorsque le dispositif de pilotage (61, 62) est en mode de manœuvre basse vitesse ; et
- sélectionner un actionnement soit du premier actionneur (31) soit du deuxième actionneur (32) dans le sous-mode désynchronisé ;
et **en ce que** le dispositif de commande (8) comporte :
- un organe de sélection (82) pour sélectionner parmi les trois sous-modes comprenant le sous-mode synchronisé, le sous-mode désynchronisé avec actionnement du seul premier actionneur (31), et le sous-mode désynchronisé avec actionnement du seul deuxième actionneur (32) ; et
- un organe de direction (81) pour diriger les premières roues (21) et les deuxièmes roues (22),
ledit organe de direction (81) étant configurée pour :
- diriger de manière synchronisée les premières roues (21) et les deuxièmes roues (22) si c'est le sous-mode synchronisé qui est sélectionné ;
- diriger les seules premières roues (21) si c'est le sous-mode désynchronisé avec actionnement du seul premier actionneur (31) qui est sélectionné, les deuxièmes roues (22) restant alors fixes ;
- diriger les seules deuxièmes roues (22) si c'est le sous-mode désynchronisé avec actionnement du seul deuxième actionneur (32) qui est sélectionné, les premières roues (21) restant alors fixes.

2. Ensemble de remorque (1) selon la revendication 1, dans lequel le dispositif de pilotage (61, 62) est configurable entre :
- un mode de transport dans lequel le premier actionneur (31) et le deuxième actionneur (32) sont non actionnables pour verrouiller les premières roues (21) et les deuxièmes roues (22) dans une position droite associée à un déplacement en ligne droite ; et
- le mode de manœuvre basse vitesse ;
et le dispositif de commande (8) est relié au dispositif de pilotage (61, 62) pour sélectionner soit le mode de transport, soit le mode de manœuvre basse vitesse.

3. Ensemble de remorque (1) selon la revendication 1 ou 2, dans lequel l'organe de sélection (82) comprend un moyen de rappel qui sollicite un retour de l'organe de sélection (81) dans la position neutre associée au sous-mode synchronisé.

4. Ensemble de remorque (1) selon l'une quelconque des revendications précédentes, dans lequel l'organe de direction (81) comprend un moyen de rappel qui sollicite un retour de l'organe de direction (81) dans une position neutre associée à un alignement des premières roues (21) et des deuxièmes roues (22) dans une position droite associée à un déplacement en ligne droite.

5. Ensemble de remorque (1) selon l'une quelconque des revendications 1 à 4, dans lequel le premier actionneur est un premier vérin (31) et le deuxième actionneur est un deuxième vérin (32).

6. Ensemble de remorque (1) selon la revendication 5, dans lequel le premier vérin est un premier vérin hydraulique (31), le deuxième vérin est un deuxième vérin hydraulique (32), et le circuit de commande est un circuit de commande hydraulique (4) alimenté hydrauliquement par au moins une centrale hydraulique (5), et ledit circuit de commande hydraulique (4) comprend un premier sous-circuit hydraulique (41) relié au premier vérin hydraulique (31) et un deuxième sous-circuit hydraulique (42) relié au deuxième vérin hydraulique (32), le premier sous-circuit hydraulique (41) et le deuxième sous-circuit hydraulique (42) étant en parallèle.

7. Ensemble de remorque (1) selon la revendication 6, dans lequel le premier sous-circuit hydraulique (41) et le deuxième sous-circuit hydraulique (42) sont alimentés hydrauliquement :
- soit par une centrale hydraulique (5) commune, et un diviseur de débit (43) est disposé entre la centrale hydraulique (5) commune et le premier sous-circuit hydraulique (41) et le deuxième sous-circuit hydraulique (42) ;
- soit par deux centrales hydrauliques respectives fonctionnant en parallèle.

8. Ensemble de remorque (1) selon l'une quelconque des revendications 6 et 7, dans lequel le dispositif de pilotage comprend :
- un premier distributeur hydraulique (61) placé sur le premier sous-circuit hydraulique (41) et équipé d'au moins une première électrovanne (65, 66) pour actionner le premier vérin hydraulique (31), ladite au moins une première électrovanne (65, 66) étant en liaison avec le dispositif de commande (8) ; et
- un deuxième distributeur hydraulique (62) placé sur deuxième sous-circuit hydraulique (42) et équipé d'au moins une deuxième électrovanne (67, 68) pour actionner le deuxième vérin hydraulique (32), ladite au moins une deuxième électrovanne (67, 68) étant en liaison avec le dispositif de commande (8).

9. Ensemble de remorque (1) selon la revendication 8, dans lequel le premier vérin hydraulique (31) est un premier vérin hydraulique double effet raccordé à deux premières voies du premier sous-circuit hydraulique (41), et le deuxième vérin hydraulique (32) est un deuxième vérin hydraulique double effet raccordé à deux deuxièmes voies du deuxième sous-circuit hydraulique (42).

10. Ensemble de remorque (1) selon la revendication 9, dans lequel :
- le premier distributeur hydraulique (61) est un premier distributeur hydraulique à tiroirs qui comprend au moins un premier tiroir ouvert (611) associé à un actionnement du premier vérin hydraulique (31) double effet selon un premier sens, et un deuxième tiroir ouvert (612) associé à un actionnement du premier vérin hydraulique (31) double effet selon un deuxième sens opposé au premier sens, et dans lequel l'au moins une première électrovanne (65, 66) commande la sélection entre le premier tiroir ouvert (611) et le deuxième tiroir ouvert (612) ;
- le deuxième distributeur hydraulique (62) est un deuxième distributeur hydraulique à tiroirs qui comprend au moins un premier tiroir ouvert (621) associé à un actionnement du deuxième vérin hydraulique (32) double effet selon un premier sens, et un deuxième tiroir ouvert (622) associé à un actionnement du deuxième vérin hydraulique (32) double effet selon un deuxième sens opposé au premier sens, et dans lequel l'au moins une deuxième électrovanne (67, 68) commande la sélection entre le premier tiroir ouvert (621) et le deuxième tiroir ouvert (622).

11. Ensemble de remorque (1) selon la revendication 10, dans lequel :
- le premier distributeur hydraulique (61) à tiroirs comprend un troisième tiroir fermé (613) associé à un non actionnement du premier vérin hydraulique (31) double effet, et l'au moins une première électrovanne comprend au moins deux premières électrovannes (65, 66) qui commandent la sélection entre le premier tiroir ouvert (611), le deuxième tiroir ouvert (612) et le troisième tiroir fermé (613) ; et
- le deuxième distributeur hydraulique (62) à tiroirs comprend un troisième tiroir fermé (623) associé à un non actionnement du deuxième vérin hydraulique (32) double effet, et l'au moins une deuxième électrovanne comprend au moins deux deuxièmes électrovannes (67, 68) qui commandent la sélection entre le premier tiroir ouvert (621), le deuxième tiroir ouvert (622) et le troisième tiroir fermé (623).

12. Ensemble de remorque (1) selon la revendication 11, dans lequel les deux premières électrovannes (65, 66) sont chacune équipées d'un système de rappel sollicitant vers une sélection du troisième tiroir fermé (613) du premier distributeur hydraulique (61) à tiroirs, et les deux deuxièmes électrovannes (67, 68) sont chacune équipées d'un système de rappel sollicitant vers une sélection du troisième tiroir fermé (623) du deuxième distributeur hydraulique (62) à tiroirs.

13. Ensemble de remorque (1) selon l'une quelconque des revendications 9 à 12, dans lequel une première valve d'équilibrage double effet (71) est disposée entre les deux premières voies du premier sous-circuit hydraulique (41), en aval du premier distributeur hydraulique (61), et une deuxième valve d'équilibrage double effet (72) est disposée entre les deux deuxièmes voies du deuxième sous-circuit hydraulique (42), en aval du deuxième distributeur hydraulique (62).

14. Ensemble de remorque (1) selon la revendication 6, dans lequel un système de calage (15) est prévu sur le châssis (10) pour prendre appui sur un sol et décoller les premières roues (21) et les deuxièmes roues (22) du sol, et dans lequel le système de calage (15) est un système de calage hydraulique qui est relié à la centrale hydraulique (5) alimentant le circuit de commande (4) hydraulique.

15. Grue à montage automatisé (9) comprenant un mât (91) monté sur une plateforme tournante (92) et supportant une flèche (93), ladite grue à montage automatisé (9) comprenant en outre un ensemble de remorque (1) selon l'une quelconque des revendications précédentes, ladite plateforme tournante (92) étant montée sur le châssis (10) dudit ensemble de remorque (1), ladite grue à montage automatisé (9) étant configurable entre une configuration de transport dans laquelle le mât (91) et la flèche sont repliés sur eux-mêmes, et une configuration de travail dans laquelle le mât (91) et la flèche sont dépliés.

## Patentansprüche

1. Anhängerbaugruppe (1), umfassend ein Fahrgestell (10), eine Aufhängungsvorrichtung (110, 120), eine Doppelachsvorrichtung (110, 120), erste Räder (21) und zweite Räder (22), wobei das Fahrgestell (10) über die Aufhängungsvorrichtung (110, 120) auf der Doppelachsvorrichtung aufliegt, wobei die Doppelachsvorrichtung eine erste Achse (11), die die ersten Räder (21) trägt, und eine zweite Achse (12) umfasst, die die zweiten Räder (22) trägt, und wobei die Anhängerbaugruppe (1) ein Lenksystem zum Lenken der ersten Räder (21) und der zweiten Räder (22) bei Manövern unterhalb einer niedrigen Geschwindigkeitsschwelle umfasst, wobei das Lenksystem ein erstes Stellglied (31), das mit den ersten Rädern (21) gekoppelt ist, ein zweites Stellglied (32), das mit den zweiten Rädern (22) gekoppelt ist, und einen Steuerkreis (4) umfasst, der mit dem ersten Stellglied (31) und dem zweiten Stellglied (32) verbunden ist,
wobei der Steuerkreis (4) eine Antriebsvorrichtung (61, 62) umfasst, die in einem Niedriggeschwindigkeits-Manövriermodus konfigurierbar ist, in dem mindestens eines des ersten Stellglieds (31) und des zweiten Stellglieds (32) betätigt werden kann, um mindestens eines der ersten Räder (21) und der zweiten Räder (22) zu lenken,
wobei die Anhängerbaugruppe (1) **dadurch gekennzeichnet ist, dass** die Antriebsvorrichtung (61, 62) im Niedriggeschwindigkeits-Manövriermodus zwischen Folgendem unterkonfigurierbar ist:
- einen synchronisierten Untermodus, wobei das erste Stellglied (31) und das zweite Stellglied (32) synchron betätigt werden können, um die ersten Räder (21) und die zweiten Räder (22) synchron zu lenken; und
- einen desynchronisierten Untermodus, wobei das erste Stellglied (31) und das zweite Stellglied (32) einzeln und unabhängig voneinander betätigt werden können, um entweder nur die ersten Räder (21) mit den feststehenden zweiten Rädern (22) in einem desynchronisierten Untermodus mit Betätigung des ersten Stellglieds (31) allein oder nur die zweiten Räder (22) mit den feststehenden ersten Rädern (21) in einem desynchronisierten Untermodus mit Betätigung des zweiten Stellglieds (32) allein zu lenken;
wobei die Anhängerbaugruppe (1) ferner eine mit der Antriebsvorrichtung (61, 62) verbundene Steuervorrichtung (8) umfasst, wobei die Steuervorrichtung (8) eine drahtlose Fernbedienung oder eine drahtgebundene Steuerung ist, die für Folgendes konfiguriert ist:
- Auswählen entweder des synchronisierten Untermodus oder des desynchronisierten Untermodus, wenn sich die Antriebsvorrichtung (61, 62) im Niedriggeschwindigkeits-Manövriermodus befindet; und
- Auswählen einer Betätigung entweder des ersten Stellglieds (31) oder des zweiten Stellglieds (32) im desynchronisierten Untermodus;
und dadurch, dass die Steuervorrichtung (8) Folgendes enthält:
- ein Auswahlelement (82) zum Auswählen zwischen den drei Untermodi, die den synchronisierten Untermodus, den desynchronisierten Untermodus mit Betätigung des ersten Stellglieds (31) allein und den desynchronisierten Untermodus mit Betätigung des zweiten Stellglieds (32) allein umfassen; und
- ein Lenkelement (81) zum Lenken der ersten Räder (21) und der zweiten Räder (22),
wobei das Lenkelement (81) für Folgendes konfiguriert ist:
- synchrones Lenken der ersten Räder (21) und der zweiten Räder (22), wenn der synchronisierte Untermodus ausgewählt ist;
- Lenken der ersten Räder (21) allein, wenn der desynchronisierte Untermodus mit Betätigung des ersten Stellglieds (31) allein ausgewählt ist, wobei die zweiten Räder (22) dann feststehen;
- Lenken der zweiten Räder (22) allein, wenn der desynchronisierte Untermodus mit Betätigung des zweiten Stellglieds (32) allein ausgewählt ist, wobei die ersten Räder (21) dann feststehen.

2. Anhängerbaugruppe (1) nach Anspruch 1, wobei die Antriebsvorrichtung (61, 62) zwischen Folgendem konfigurierbar ist:
- einem Transportmodus, in dem das erste Stellglied (31) und das zweite Stellglied (32) nicht betätigt werden können, um die ersten Räder (21) und die zweiten Räder (22) in einer geraden Position, die mit einer geradlinigen Verschiebung verbunden ist, zu blockieren; und
- dem Niedriggeschwindigkeits-Manövriermodus;
und die Steuervorrichtung (8) mit der Antriebsvorrichtung (61, 62) verbunden ist, um entweder den Transportmodus oder den Niedriggeschwindigkeits-Manövriermodus auszuwählen.

3. Anhängerbaugruppe (1) nach Anspruch 1 oder 2, wobei das Auswahlelement (82) ein Rückstellmittel umfasst, das eine Rückstellung des Auswahlelements (81) in die mit dem synchronisierten Untermodus verbundene Neutralposition vorspannt.

4. Anhängerbaugruppe (1) nach einem der vorhergehenden Ansprüche, wobei das Lenkelement (81) ein Rückstellmittel umfasst, das eine Rückstellung des Lenkelements (81) in eine Neutralposition vorspannt, die mit einer Ausrichtung der ersten Räder (21) und der zweiten Räder (22) in einer geraden Position verbunden ist, die mit einer geradlinigen Verschiebung verbunden ist.

5. Anhängerbaugruppe (1) nach einem der Ansprüche 1 bis 4, wobei das erste Stellglied ein erster Zylinder (31) ist und das zweite Stellglied ein zweiter Zylinder (32) ist.

6. Anhängerbaugruppe (1) nach Anspruch 5, wobei der erste Zylinder ein erster Hydraulikzylinder (31) ist, der zweite Zylinder ein zweiter Hydraulikzylinder (32) ist, und der Steuerkreis ein hydraulischer Steuerkreis (4) ist, der hydraulisch von mindestens einer Hydraulikzentrale (5) versorgt wird, und der hydraulische Steuerkreis (4) einen ersten hydraulischen Unterkreis (41), der mit dem ersten Hydraulikzylinder (31) verbunden ist, und einen zweiten hydraulischen Unterkreis (42) umfasst, der mit dem zweiten Hydraulikzylinder (32) verbunden ist, wobei der erste hydraulische Unterkreis (41) und der zweite hydraulische Unterkreis (42) parallel sind.

7. Anhängerbaugruppe (1) nach Anspruch 6, wobei der erste hydraulische Unterkreis (41) und der zweite hydraulische Unterkreis (42) hydraulisch versorgt werden:
- entweder durch ein gemeinsames Hydraulikaggregat (5), und ein Stromteiler (43) ist zwischen dem gemeinsamen Hydraulikaggregat (5) und dem ersten hydraulischen Unterkreis (41) und dem zweiten hydraulischen Unterkreis (42) angeordnet;
- oder durch jeweils zwei parallel arbeitende Hydraulikaggregate.

8. Anhängerbaugruppe (1) nach einem der Ansprüche 6 und 7, wobei die Antriebsvorrichtung Folgendes umfasst:
- einen ersten Hydraulikverteiler (61), der auf dem ersten hydraulischen Unterkreis (41) angeordnet und mit mindestens einem ersten Magnetventil (65, 66) ausgestattet ist, um den ersten Hydraulikzylinder (31) zu betätigen, wobei das mindestens eine erste Magnetventil (65, 66) mit der Steuervorrichtung (8) in Verbindung steht; und
- einen zweiten Hydraulikverteiler (62), der auf dem zweiten hydraulischen Unterkreis (42) angeordnet und mit mindestens einem zweiten Magnetventil (67, 68) ausgestattet ist, um den zweiten Hydraulikzylinder (32) zu betätigen, wobei das mindestens eine zweite Magnetventil (67, 68) mit der Steuervorrichtung (8) in Verbindung steht.

9. Anhängerbaugruppe (1) nach Anspruch 8, wobei der erste Hydraulikzylinder (31) ein erster doppeltwirkender Hydraulikzylinder ist, der an zwei erste Wege des ersten hydraulischen Unterkreises (41) angeschlossen ist, und der zweite Hydraulikzylinder (32) ein zweiter doppeltwirkender Hydraulikzylinder ist, der an zwei zweite Wege des zweiten hydraulischen Unterkreises (42) angeschlossen ist.

10. Anhängerbaugruppe (1) nach Anspruch 9, wobei:
- der erste Hydraulikverteiler (61) ein erstes hydraulisches Schieberventil ist, das mindestens einen ersten offenen Schieber (611), der mit einer Betätigung des ersten doppeltwirkenden Hydraulikzylinders (31) in einer ersten Richtung verbunden ist, und einen zweiten offenen Schieber (612) umfasst, der mit einer Betätigung des ersten doppeltwirkenden Hydraulikzylinders (31) in einer zweiten Richtung, die der ersten Richtung entgegengesetzt ist, verbunden ist, und wobei das mindestens eine erste Magnetventil (65, 66) die Auswahl zwischen dem ersten offenen Schieber (611) und dem zweiten offenen Schieber (612) steuert;
- der zweite Hydraulikverteiler (62) ein zweites hydraulisches Schieberventil ist, das mindestens einen ersten offenen Schieber (621), der mit einer Betätigung des zweiten doppeltwirkenden Hydraulikzylinders (32) in einer ersten Richtung verbunden ist, und einen zweiten offenen Schieber (622) umfasst, der mit einer Betätigung des zweiten doppeltwirkenden Hydraulikzylinders (32) in einer zweiten Richtung, die der ersten Richtung entgegengesetzt ist, verbunden ist, und wobei das mindestens eine zweite Magnetventil (67, 68) die Auswahl zwischen dem ersten offenen Schieber (621) und dem zweiten offenen Schieber (622) steuert.

11. Anhängerbaugruppe (1) nach Anspruch 10, wobei:
- das erste hydraulische Schieberventil (61) einen dritten geschlossenen Schieber (613) umfasst, der mit einer Nichtbetätigung des ersten doppeltwirkenden Hydraulikzylinders (31) verbunden ist, und das mindestens eine erste Magnetventil mindestens zwei erste Magnetventile (65, 66) umfasst, die die Auswahl zwischen dem ersten offenen Schieber (611), dem zweiten offenen Schieber (612) und dem dritten geschlossenen Schieber (613) steuern; und
- das zweite hydraulische Schieberventil (62) einen dritten geschlossenen Schieber (623) umfasst, der mit einer Nichtbetätigung des zweiten doppeltwirkenden Hydraulikzylinders (32) verbunden ist, und das mindestens eine zweite Magnetventil mindestens zwei zweite Magnetventile (67, 68) umfasst, die die Auswahl zwischen dem ersten offenen Schieber (621), dem zweiten offenen Schieber (622) und dem dritten geschlossenen Schieber (623) steuern.

12. Anhängerbaugruppe (1) nach Anspruch 11, wobei die beiden ersten Magnetventile (65, 66) jeweils mit einem Rückstellsystem ausgestattet sind, das in Richtung einer Auswahl des dritten geschlossenen Schiebers (613) des ersten hydraulischen Schieberventils (61) vorgespannt ist, und die beiden zweiten Magnetventile (67, 68) jeweils mit einem Rückstellsystem ausgestattet sind, das in Richtung einer Auswahl des dritten geschlossenen Schiebers (623) des zweiten hydraulischen Schieberventils (62) vorgespannt ist.

13. Anhängerbaugruppe (1) nach einem der Ansprüche 9 bis 12, wobei ein erstes doppeltwirkendes Ausgleichsventil (71) zwischen den beiden ersten Wegen des ersten hydraulischen Unterkreises (41), nach dem ersten Hydraulikverteiler (61), angeordnet ist, und ein zweites doppeltwirkendes Ausgleichsventil (72) zwischen den beiden zweiten Wegen des zweiten hydraulischen Unterkreises (42), nach dem zweiten Hydraulikverteiler (62), angeordnet ist.

14. Anhängerbaugruppe (1) nach Anspruch 6, wobei ein Verkeilungssystem (15) auf dem Fahrgestell (10) vorgesehen ist, um sich auf dem Boden abzustützen und die ersten Räder (21) und die zweiten Räder (22) vom Boden abzuheben, und wobei das Verkeilungssystem (15) ein hydraulisches Verkeilungssystem ist, das mit dem Hydraulikaggregat (5) verbunden ist, das den hydraulischen Steuerkreis (4) versorgt.

15. Selbstaufstellender Kran (9), der einen Mast (91) umfasst, der auf einer Drehplatte (92) montiert ist und einen Ausleger (93) trägt, wobei der selbstaufstellende Kran (9) ferner eine Anhängerbaugruppe (1) nach einem der vorhergehenden Ansprüche umfasst, wobei die Drehplatte (92) auf dem Fahrgestell (10) der Anhängerbaugruppe (1) montiert ist, wobei der selbstaufstellende Kran (9) zwischen einer Transportkonfiguration, in der der Mast (91) und der Ausleger auf sich selbst zurückgeklappt sind, und einer Arbeitskonfiguration, in der der Mast (91) und der Ausleger ausgeklappt sind, konfigurierbar ist.

## Claims

1. A trailer assembly (1), comprising a chassis (10), a suspension device (110, 120), a double-axle device (110, 120), first wheels (21) and second wheels (22), where said chassis (10) rests, via said suspension device (110, 120), on said double-axle device, wherein the double-axle device comprises a first axle (11) supporting said first wheels (21) and a second axle supporting said second wheels (22), and wherein the trailer assembly (1) comprises a steering system to steer the first wheels (21) and the second wheels (22) during maneuvers below a low speed threshold, said steering system comprises a first actuator (31) which is coupled to the first wheels (21), a second actuator (32) which is coupled to the second wheels (22), and a control circuit (4) connected to the first actuator (31) and to the second actuator (32),
wherein said control circuit (4) comprises a driving device (61, 62) configurable in a low speed maneuvering mode in which at least one of the first actuator (31) and the second actuator (32) can be actuated to steer at least one of the first wheels (21) and the second wheels (22),
said trailer assembly (1) being **characterized in that**, in the low speed maneuvering mode, the driving device (61, 62) is sub-configurable between:
- a synchronized sub-mode in which the first actuator (31) and the second actuator (32) can be actuated in a synchronized manner to steer the first wheels (21) and the second wheels (22) in a synchronized manner; and
- a desynchronized sub-mode in which the first actuator (31) and the second actuator (32) can be actuated individually and independently to steer either only the first wheels (21) with the second wheels (22) fixed in a desynchronized sub-mode with actuation of the first actuator (31) alone, or only the second wheels (22) with the first wheels (21) fixed in a desynchronized sub-mode with actuation of the second actuator (32) alone;
said trailer assembly (1) further comprising a control device (8) which is connected to the driving device (61, 62), said control device (8) being a wireless remote control or a wired control configured to:
- select either the synchronized sub-mode or the desynchronized sub-mode when the driving device (61, 62) is in the low speed maneuvering mode; and
- select an actuation either of the first actuator (31) or of the second actuator (32) in the desynchronized sub-mode;
and wherein the control device (8) includes:
- a selection member (82) to select among the three sub-modes comprising the synchronized sub-mode, the desynchronized sub-mode with actuation of the first actuator (31) alone, and the desynchronized sub-mode with actuation of the second actuator (32) alone; and
- a steering member (81) to steer the first wheels (21) and the second wheels (22),
said steering member (81) being configured to:
- steer the first wheels (21) and the second wheels (22) in a synchronized manner if it is the synchronized sub-mode which is selected;
- steer the first wheels (21) alone if it is the desynchronized sub-mode with actuation of the first actuator (31) alone which is selected, the second wheels (22) then remaining fixed;
- steer the second wheels (22) alone if it is the desynchronized sub-mode with actuation of the second actuator (32) alone which is selected, the first wheels (21) then remaining fixed.

2. The trailer assembly (1) according to claim 1, wherein the driving device (61, 62) is configurable between:
- a transport mode in which the first actuator (31) and the second actuator (32) cannot be actuated to lock the first wheels (21) and the second wheels (22) in a straight position associated to a straight-line displacement; and
- the low speed maneuvering mode;
and the control device (8) is connected to the driving device (61, 62) to select either the transport mode, or the low speed maneuvering mode.

3. The trailer assembly (1) according to claim 1 or 2, wherein the selection member (82) comprises return means which biases a return of the selection member (82) into the neutral position associated to the synchronized sub-mode.

4. The trailer assembly (1) according to any one of the preceding claims, wherein the steering member (81) comprises return means which biases a return of the steering member (81) into a neutral position associated to an alignment of the first wheels (21) and the second wheels (22) in a straight position associated to a straight-line displacement.

5. The trailer assembly (1) according to any one of the claims 1 to 4, wherein the first actuator is a first cylinder (31) and the second actuator is a second cylinder (32).

6. The trailer assembly (1) according to claim 5, wherein the first cylinder is a first hydraulic cylinder (31), the second cylinder is a second hydraulic cylinder (32), and the control circuit (4) is a hydraulic control circuit (4) hydraulically powered by at least one hydraulic power plant (5), and said hydraulic control circuit (4) comprises a first hydraulic sub-circuit (41) connected to the first hydraulic cylinder (31) and a second hydraulic sub-circuit (42) connected to the second hydraulic cylinder (32), the first hydraulic sub-circuit (41) and the second hydraulic sub-circuit (42) being in parallel.

7. The trailer assembly (1) according to claim 7, wherein the first hydraulic sub-circuit (41) and the second hydraulic sub-circuit (42) are hydraulically powered:
- either by a common hydraulic power plant (5), and a flow divider (43) is disposed between the common hydraulic power plant (5) and the first hydraulic sub-circuit (41) and the second hydraulic sub-circuit (42);
- or by two respective hydraulic power plants operating in parallel.

8. The trailer assembly (1) according to any one of claims 6 and 7, wherein the driving device comprises:
- a first hydraulic distributor (61) placed on the first hydraulic sub-circuit (41) and equipped with at least one first solenoid valve (65, 66) to actuate the first hydraulic cylinder (31), said at least one first solenoid valve (65, 66) being in connection with the control device (8); and
- a second hydraulic distributor (62) placed on the second hydraulic sub-circuit (42) and equipped with at least one second solenoid valve (67, 68) to actuate the second hydraulic cylinder (32), said at least one second solenoid valve (67, 68) being in connection with the control device (8).

9. The trailer assembly (1) according to claim 8, wherein the first hydraulic cylinder (31) is a first double-acting hydraulic cylinder joined to two first ways of the first hydraulic sub-circuit (41), and the second hydraulic cylinder (32) is a second double-acting hydraulic cylinder joined to two second ways of the second hydraulic sub-circuit (42).

10. The trailer assembly (1) according to claim 9, wherein:
- the first hydraulic distributor (61) is a first hydraulic spool valve which comprises at least one first open spool (611) associated to an actuation of the first double-acting hydraulic cylinder (31) in a first direction, and one second open spool (612) associated to an actuation of the first double-acting hydraulic cylinder (31) in a second direction opposite to the first direction, and in which the at least one first solenoid valve (65, 66) controls the selection between the first open spool (611) and the second open spool (612);
- the second hydraulic distributor (62) is a second hydraulic spool valve which comprises at least one first open spool (621) associated to an actuation of the second double-acting hydraulic cylinder (32) in a first direction, and one second open spool (622) associated to an actuation of the second double-acting hydraulic cylinder (32) in a second direction opposite to the first direction, and in which the at least one second solenoid valve (67, 68) controls the selection between the first open spool (621) and the second open spool (622).

11. The trailer assembly (1) according to claim 10, wherein:
- the first hydraulic spool valve (61) comprises a third closed spool (613) associated to a non-actuation of the first double-acting hydraulic cylinder (31), and the at least one first solenoid valve comprises at least two first solenoid valves (65, 66) which control the selection between the first open spool (611), the second open spool (612) and the third closed spool (613); and
- the second hydraulic spool valve (62) comprises a third closed spool (623) associated to a non-actuation of the second double-acting hydraulic cylinder (32), and the at least one second solenoid valve comprises at least two second solenoid valves (67, 68) which control the selection between the first open spool (621), the second open spool (622) and the third closed spool (623).

12. The trailer assembly (1) according to claim 11, wherein the two first solenoid valves (65, 66) are each equipped with a return system biasing towards a selection of the third closed spool (613) of the first hydraulic spool valve (61), and the two second solenoid valves (67, 68) are each equipped with a return system biasing towards a selection of the third closed spool (623) of the second hydraulic spool valve (62).

13. The trailer assembly (1) according to any one of the claims 9 to 12, wherein a first double-acting balancing valve (71) is disposed between the two first ways of the first hydraulic sub-circuit (41), downstream of the first hydraulic distributor (61), and a second double-acting balancing valve (72) is disposed between the two second ways of the second hydraulic sub-circuit (42), downstream of the second hydraulic distributor (62).

14. The trailer assembly (1) according to claim 6, wherein a wedging system (15) is provided on the chassis (10) to bear on ground and take off the first wheels (21) and the second wheels (22) from the ground, and wherein the wedging system (15) is a hydraulic wedging system which is connected to the hydraulic power plant (5) powering the hydraulic control circuit (4).

15. A self-erecting crane (9) comprising a mast (91) which is mounted on a rotating platform (92) and supporting a boom (93), said self-erecting crane (9) further comprising a trailer assembly (1) according to any one of the preceding claims, said rotating platform (92) being mounted on the chassis (10) of said trailer assembly (1), said self-erecting crane (9) being configurable between a transport configuration in which the mast (91) and the boom (93) are folded back on themselves, and a working configuration in which the mast (91) and the boom are unfolded.
